# EUROPÄISCHE PATENTSCHRIFT

(11) **EP 2 135 434 B1**
(45) Veröffentlichungstag und Bekanntmachung des Hinweises auf die Patenterteilung: **04.08.2010**
(21) Anmeldenummer: 08716214.5
(22) Anmeldetag: 03.03.2008
(51) Int. Cl.: H04M 1/24, G01R 31/317

(54) **UMSCHALTVORRICHTUNG ZUM WECHSELWEISEN PRÜFEN VON MOBILFUNKENDGERÄTEN**
SWITCHING DEVICE FOR ALTERNATELY TESTING MOBILE RADIO TERMINALS
DISPOSITIF DE COMMUTATION DESTINÉ AU CONTRÔLE ALTERNÉ DE TERMINAUX DE RADIOTÉLÉPHONIE MOBILE

(30) Priorität: 22.03.2007 DE 102007013756
(43) Veröffentlichungstag der Anmeldung: 23.12.2009
(73) Patentinhaber: Rohde & Schwarz GmbH & Co. KG, 81671 München (DE)
(72) Erfinder: HOLZMANN, Gottfried, 85604 Zorneding (DE); MITTERMAIER, Werner, 85435 Erding (DE); LUTZ, Thomas, 81739 München (DE)
(74) Vertreter: Beder, Jens
(86) Internationale Anmeldenummer: PCT/EP2008/001695
(87) Internationale Veröffentlichungsnummer: WO 2008/113470

(56) Entgegenhaltungen:
- EP-A- 0 734 192
- US-A1- 2005 186 914

## Beschreibung

Die Erfindung betrifft eine Umschaltvorrichtung zum wechselweisen Verbinden eines ersten oder eines zweiten Prüfanschlusses mit einem Messgerät.

Bei der Produktion vom Mobilfunkgeräten ist es üblich, die fertig hergestellten Mobilfunkgeräte hinsichtlich ihrer Funktion zu überprüfen. Die Mobilfunkgeräte werden hierzu mit einem Messgerät verbunden, welches eine Basisstation emuliert. Nach dem Kontaktieren des Messgeräts synchronisieren sich die Mobilfunkgeräte zunächst auf das Zeitraster des Messgeräts auf und bauen dann eine Verbindung auf. Wenn die Verbindung aufgebaut ist kann der eigentliche Messvorgang durchgeführt werden. Ein solches Vorgehen ist aus der DE 103 24 745 A1 bekannt. Während der Verbindung zwischen dem Messgerät und dem zu testendem Mobilfunkgerät werden von dem Messgerät an das zu testende Mobilfunkgerät Testsignale übermittelt und das daraufhin von dem Mobilfunkgerät zurückgesandte Signal ausgewertet.

Üblicherweise verfügt ein Messgerät über einen bidirektionalen Anschluss, über den sowohl das Testsignal ausgegeben als auch das Messsignal, also das zurückkommende Signal von dem Mobilfunkgerät, eingelesen wird. Bei der Produktion von Mobilfunkgeräten wird jedes hergestellte Gerät hinsichtlich seiner Funktion bzw. auf das Erfüllen der relevanten Spezifikationen überprüft. Dadurch entsteht ein erheblicher Zeitverlust beim Wechsel der einzelnen Geräte, die mit dem Prüfanschluss des Messgeräts verbunden werden müssen. Um zumindest den Zeitanteil einsparen zu können, der zum Kontaktieren der Mobilfunkgeräte erforderlich ist, ist es daher bekannt, eine Umschaltvorrichtung zu verwenden. Diese Umschaltvorrichtung weist einen ersten und einen zweiten Prüfanschluss auf. Die beiden Prüfanschlüsse sind identisch aufgebaut, wobei jeder Prüfanschluss gleichzeitig mit einem Mobilfunkgerät verbunden sein kann. Die Umschaltvorrichtung enthält Schaltmittel, mit denen jeweils einer der beiden Prüfanschlüsse mit dem bidirektionalen Messgeräteanschluss des Messgeräts verbunden werden kann. Auf diese Weise kann ein neu zu prüfendes Mobilfunkgerät bereits kontaktiert werden, während bei einem anderen die Messung noch läuft. Nach Abschluss dieser Messung wird dann die Umschaltvorrichtung betätigt, ohne dass das Mobilfunkgerät, dessen Messung gerade abgeschlossen wurde, getrennt werden muss. Während also die Messung bei dem zweiten Mobilfunkgerät läuft, kann an dem anderen Prüfanschluss ein Gerätewechsel durchgeführt werden.

Nachteilig an einer solchermaßen bekannten Messstation ist es, dass erst nach dem Betätigen der einfachen Umschaltvorrichtung ein Synchronisationsprozess zwischen dem nun zu testenden Mobilfunkgerät und dem Messgerät erfolgt, da in Abhängigkeit von dem Schaltstellung der Umschaltvorrichtung jeweils einer der beiden Prüfanschlüsse vollständig von dem Messgerät getrennt ist.

Es ist die Aufgabe, eine Umschaltvorrichtung zu schaffen, mit der die Gesamtmesszeit weiter reduziert werden kann.

Die Aufgabe wird durch die erfindungsgemäße Umschaltvorrichtung mit den Merkmalen des Anspruchs 1 gelöst.

Die erfindungsgemäße Umschaltvorrichtung weist zumindest einen ersten und zweiten Prüfanschluss auf, die zum Verbinden mit jeweils einem Prüfling, insbesondere einem Mobilfunkgerät, vorgesehen sind. Ferner weist die Umschaltvorrichtung einen Messgeräteanschluss zum Verbinden der Umschaltvorrichtung mit einem Messgerät auf. Der Messgeräteanschluss umfasst zumindest einen Testsignaleingang. Erfindungsgemäß ist der Testsignaleingang mit einem ersten Signalpfad und mit einem zweiten, gedämpften Signalpfad verbunden. Der erste Signalpfad ist wechselweise mit dem ersten Prüfanschluss oder dem zweiten Prüfanschluss oder einem weiteren Prüfanschluss verbunden. Der zweite Signalpfad ist zumindest mit jeweils dem zumindest einen anderen Prüfanschluss verbunden.

Auf diese Weise wird während der Durchführung einer Messung nicht nur das gerade zu testende Mobilfunkgerät mit dem Testsignal beaufschlagt, sondern auch der jeweils andere Anschluss wird bereits mit dem Testsignal beaufschlagt, allerdings mit abgeschwächter Signalstärke. Dieses gezielte Übersprechen des von dem Messgerät erzeugten Testsignals auf den jeweils anderen Prüfanschluss ermöglicht es, ein bereits an dem anderen Prüfanschluss angeschlossenes Mobilfunkgerät auf das Messgerät aufzusynchronisieren. Ist die eigentliche Messung bei dem mit dem ersten Signalpfad verbundenen Prüfanschluss angeschlossenen Mobilfunkgerät abgeschlossen, so wird der erste Signalpfad mit dem anderen Prüfanschluss verbunden. Infolgedessen kann nun das an dem anderen Prüfanschluss angeschlossenen Mobilfunkgerät getestet werden. Während der Durchführung der Messung an dem Mobilfunkgerät, welches an dem anderen, z.B. zweiten Prüfanschluss angeschlossen ist, kann gleichzeitig an dem ersten Prüfanschluss bereits ein Gerätewechsel durchgeführt werden. Da während der Messung an dem zweiten Prüfanschluss ein Übersprechen des Testsignals über den zweiten Signalpfad auf den ersten Prüfanschluss erfolgt, kann wiederum gleichzeitig hier bereits eine Synchronisation des dort neu angeschlossenen und kontaktierten Mobilfunkgeräts erfolgen. Ist die Messung des mit dem zweiten Prüfanschluss verbundenen Mobilfunkgeräts abgeschlossen, wird die Umschaltvorrichtung erneut betätigt und der erste Signalpfad wieder mit dem ersten Prüfanschluss verbunden. Auf diese Weise lässt sich die Gesamtmesszeit, also diejenige Zeitspanne, die zwischen dem Abschluss einer Messung eines Mobilfunkgeräts und dem Abschluss der Messung bei dem nächsten Mobilfunkgerät verstreicht, erheblich reduzieren. Ein beträchtlicher Teil dieser Gesamtmessezeit wird durch das Aufsynchronisieren verursacht. Da mit der erfindungsgemäßen Umschaltvorrichtung dieses Aufsynchronisieren gleichzeitig mit der Durchführung einer Messung oder einem Verbindungsaufbau an dem jeweils anderem Prüfanschluss erfolgen kann, verkürzt sich die Gesamtmesszeit erheblich.

In den Unteransprüchen sind vorteilhafte Weiterbildungen der erfindungsgemäßen Umschaltvorrichtung ausgeführt.

Insbesondere ist es vorteilhaft, in dem zweiten Signalpfad eine Dämpfungsvorrichtung vorzusehen. Durch die Dämpfungsvorrichtung wird eine Entkopplung zwischen dem ersten Signalpfad und dem zweiten Signalpfad erreicht, die die ungestörte Durchführung der eigentlichen Messung ermöglicht.

Der zweite Signalpfad weist vorzugsweise eine Verzweigungsvorrichtung auf. Durch diese Verzweigungsvorrichtung teilt sich der zweite Signalpfad in einen ersten Signalzweig und einen zweiten Signalzweig auf, die mit dem ersten bzw. dem zweiten Prüfanschluss verbunden sind. Durch die Verzweigungsvorrichtung wird sichergestellt, dass sowohl beim Wechsel eines Mobilfunkgeräts an dem ersten Prüfanschluss als auch beim Wechsel eines Mobilfunkgeräts an dem zweiten Prüfanschluss bereits während der Messung an einem beliebigen Prüfanschluss eine Synchronisation an dem jeweils anderem Prüfanschluss durchgeführt werden kann. Damit wird ein kontinuierlicher Ablauf während der Prüfung der Mobilfunkgeräte in der Produktion erreicht.

Im einfachsten Fall kann die Verzweigungsvorrichtung als Splitter ausgeführt sein. Eine solche Verzweigungsvorrichtung in Form eines Splitters ist dann möglich, wenn eine ausreichende Entkoppelung zwischen dem ersten Signalpfad und dem zweiten Signalpfad gegeben ist. In diesem Fall wird das beiden Prüfanschlüssen über den zweiten Signalpfad zugeführte abgeschwächte Signal nicht zu einem Störsignal der gleichzeitig an einem der beiden Prüfanschlüsse über den ersten Signalpfad durchgeführten Messung.

Um eine vollständige Trennung zu erreichen, ist es besonders bevorzugt, die Verzweigungsvorrichtung als Schaltelement auszuführen. Mithilfe des Schaltelements kann dann zwischen dem ersten Signalzweig und dem zweiten Signalzweig, die mit dem ersten bzw. dem zweiten Prüfanschluss verbunden sind, umgeschaltet werden. Auf diese Weise wird das über den zweiten Signalpfad geleitete Testsignal lediglich demjenigen Prüfanschluss zugeführt, welcher gerade nicht mit dem ersten Signalpfad verbunden ist.

Die Verzweigungsvorrichtung ist hierzu insbesondere über einen ersten Signalzweig mit dem ersten Prüfanschluss verbunden und über einen zweiten Signalzweig mit dem zweiten Prüfanschluss verbunden, wobei in jeden der beiden Signalzweige vorzugsweise ein weiteres Schaltelement vorgesehen ist. Durch das jeweils weitere Schaltelement kann der erste Prüfanschluss bzw. der zweite Prüfanschluss entweder mit der Verzweigungsvorrichtung oder aber mit einem Abschlusswiderstand verbunden werden. Durch das Verbinden des ersten bzw. des zweiten Prüfanschlusses mit einem Abschlusswiderstand über das weitere Schaltelement wird sichergestellt, dass eine Beeinflussung der Messung über den offenen Signalzweig nicht erfolgt.

Die Dämpfungsvorrichtung umfasst vorzugsweise ein Dämpfungsglied in dem zweiten Signalpfad und in jedem Signalzweig ein weiteres Dämfpungsglied. Durch diese verteilt angeordneten Dämpfungsglieder wird eine Entkopplung erreicht und damit ein Einfluss der evtl. vorhandenen Schalter und Abschlusswiderstände verringert.

Der erste und der zweite Prüfanschluss sind vorzugsweise wechselweise mit einem Messsignalausgang des Messgeräteanschlusses verbindbar. Hierdurch kann nicht nur das zugeführte Testsignal gezielt mit dem ersten oder dem zweiten Prüfanschluss verbunden werden, sondern es wird auch das von dem Mobilfunkgerät in entgegengesetzter Richtung übertragene Messsignal gezielt dem Messgerät zugeführt. Eine gegenseitige Beeinflussung des Messsignals und insbesondere eine Verschlechterung der Signalqualität wird damit ausgeschlossen.

Zum wechselweisen Verbinden des ersten Prüfanschlusses bzw. des zweiten Prüfanschlusses mit dem Testsignaleingang bzw. dem Testsignalausgang ist vorzugsweise jeweils ein Schalter vorgesehen. Die beiden Schalter sind insbesondere miteinander gekoppelt, so dass gleichzeitig sowohl für ein gesendetes Testsignal als auch für ein zu empfangendes Messsignal zwischen den beiden Prüfanschlüssen umgeschaltet werden kann.

Ein bevorzugtes Ausführungsbeispiel der erfindungsgemäßen Umschaltvorrichtung ist in der Zeichnung dargestellt und wird in der nachfolgenden Beschreibung näher erläutert. Es zeigen:
- Fig. 1: eine schematische Darstellung einer erfindungsgemäßen Umschaltvorrichtung; und
- Fig.2: eine Darstellung zur Erläuterung des zeitlichen Ablauf während der Durchführung von Messungen an Mobilfunkgeräten.

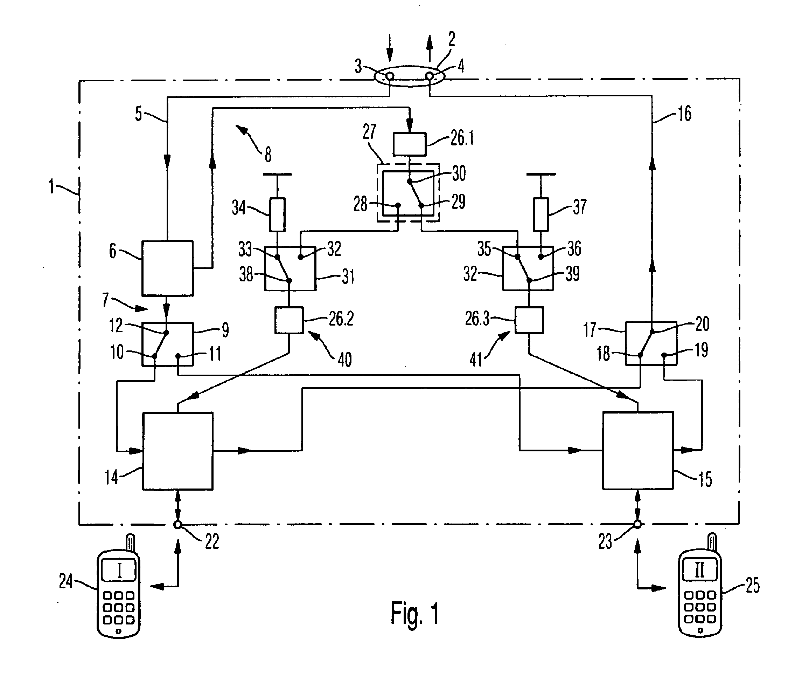

In der Fig. 1 ist ein Blockschaltbild einer erfindungsgemäßen Umschaltvorrichtung 1 gezeigt. Die erfindungsgemäße Umschaltvorrichtung 1 ist über einen Messgeräteanschluss 2 mit einem Messgerät verbindbar. Der Messgeräteanschluss 2 umfasst dabei einen

Testsignaleingang 3 und einen Messsignalausgang 4. Über den Testsignaleingang 3 wird ein von dem nicht dargestellten Messgerät erzeugtes Testsignal zugeführt. Diese zugeführte Testsignal wird über die Umschaltvorrichtung 1 an ein bestimmtes von zwei angeschlossenen Mobilfunkgerät ausgegeben. Das durch das Mobilfunkgerät beispielsweise verarbeitete Testsignal bzw. das Antwortsignal werden als Messsignal über den Messsignalausgang 4 zurück an das angeschlossene Messgerät übermittelt und dort analysiert.

Das Testsignal, das über den Testsignaleingang 3 dem zu testenden Mobilfunkgerät zugeführt werden soll, wird über eine Testsignaleingangsleitung 5 einem Signalteiler 6 zugeführt. Der Signalteiler 6 teilt das Signal auf. Ein erster Signalteil des geteilten Testsignals wird über einen ersten Signalpfad 7 an das angeschlossene, zu prüfende Mobilfunkgerät weitergeleitet. Der zweite Signalteil wird über einen zweiten Signalpfad 8 zum Synchronisieren eines zweiten Mobilfunkgeräts weitergeleitet. Dabei kann der Signalteiler 6 bereits Dämpfungsmittel umfassen, die zu einer Abschwächung des zweiten Signalteils um beispielsweise 6dB führen. Dagegen wird der erste Signalteil möglichst ungedämpft zu dem zu messenden Mobilfunkgerät durchgeleitet. Anstelle einer Integration der Dämpfungsmittel in den Signalteiler 6 kann die Dämpfung auch im Bereich des zweiten Signalpfads 8 erfolgen, wie es nachfolgend erläutert ist.

In dem ersten Signalpfad 7 ist ein erster Schalter 9 vorgesehen. Mithilfe des ersten Schalters 9 kann der erste Signalteil entweder einer ersten HF-Verbindungseinrichtung 14 oder einer zweiten HF-Verbindungseinrichtung 15 zugeführt werden. Der erste Schalter 9 weist hierzu einen ersten Testsignalausgang 10 und einen zweiten Testsignalausgang 11 auf. Der erste Testsignalausgang 10 ist mit der ersten HF-Verbindungseinrichtung 14 verbunden. Der zweite Testsignalausgang 11 ist dagegen mit der zweiten HF-Verbindungseinrichtung 15 verbunden. Ferner umfasst der erste Schalter 9 einen Testsignalanschluss 12, der permanent mit dem Signalteiler 6 verbunden ist. Der erste Schalter 9 kann wechselweise eine Verbindung zwischen dem Testsignalanschluss 12 und dem ersten Testsignalausgang 10 oder dem zweitem Testsignalausgang 11 erzeugen. Die erste HF-Verbindungseinrichtung 14 ist mit einem ersten Prüfanschluss 22 verbunden. In entsprechender Weise ist die zweite HF-Verbindungseinrichtung 15 mit einem zweiten Prüfanschluss 23 verbunden. Die Prüfanschlüsse 22, 23 sind mit jeweils einem Mobilfunkgerät 24, 25 verbindbar.

Sofern an den ersten Prüfanschluss 22 ein erstes Mobilfunkgerät 24 und an den zweiten Prüfanschluss 23 ein zweites Mobilfunkgerät 25 angeschlossen ist, kann mithilfe des ersten Schalters 9 ausgewählt werden, welchem der beiden Mobilfunkgeräte 24, 25 das erste Testsignal mit ungedämpfter Signalstärke zugeführt werden soll. An diesem ersten oder zweiten Prüfanschluss, der über den ersten Schalter 9 mit dem Signalteiler 6 verbunden ist, kann dann eine Messung durchgeführt werden. Hierzu werden die Testsignale durch das Mobilfunkgerät verarbeitet. Entsprechend den Spezifikationen wird ein Antwortsignal durch das Mobilfunkgerät ausgegeben. Diese Antwortsignal wird ebenfalls über den ersten Prüfanschluss 22 oder den zweiten Prüfanschluss 23 wieder der ersten bzw. zweiten HF-Verbindungseinrichtung 14, 15 zugeführt. Die erste HF-Verbindungseinrichtung 14 und die zweite HF-Verbindungseinrichtung 15 sind über einen zweiten Schalter 17 mit dem Messsignalausgang 4 verbunden.

Der zweite Schalter 17 weist einen ersten Messsignaleingangsanschluss 18 auf, der mit der ersten HF-Verbindungseinrichtung 14 verbunden ist. Ferner weist der zweite Schalter 17 einen zweiten Messsignaleingangsanschluss 19 auf, der mit der zweiten HF-Verbindungseinrichtung 15 verbunden ist. Zur Übertragung des Messsignals, welches von dem ersten Mobilfunkgerät 24 bzw. dem zweitem Mobilfunkgerät 25 über die erste HF-Verbindungseinrichtung 14 oder die zweite HF-Verbindungseinrichtung 15 dem zweiten Schalter 17 zugeführt wird, wird durch den zweiten Schalter 17 eine Verbindung zwischen dem ersten Messsignaleingangsanschluss 18 oder dem zweiten Messsignaleingangsanschluss 19 und einem Ausgang 20 des zweiten Schalters 17 erzeugt. Der Ausgang 20 des zweiten Schalters 17 ist über eine Messsignalleitung 16 mit dem Messsignalausgang 4 der Umschaltvorrichtung 1 verbunden.

Durch gleichzeitiges Betätigen des ersten Schalters 9 und des zweiten Schalters 17 kann somit zwischen Messungen an dem ersten Prüfanschluss 22 und dem zweiten Prüfanschluss 23 umgeschaltet werden. Damit kann ein erstes Mobilfunkgerät 24 und ein zweites Mobilfunkgerät 25 gleichzeitig kontaktiert sein, wobei eine Verbindung zu dem Messgerätanschluss 2 lediglich durch ein Mobilfunkgerät 24 oder 25 erzeugt wird.

Bei Messungen bei Mobilfunkgeräten nach dem GSM-Standard, für die die erfindungsgemäße Umschaltvorrichtung vorzugsweise vorgesehen ist, muss vor der eigentlichen Messung zunächst eine Synchronisation zwischen dem Mobilfunkgerät und der durch das Messgerät emulierten Basisstation durchgeführt werden. Hierzu wird durch das Messgerät ein BCCH (Broadcast Control Channel) -Signal ausgesandt. Dieses Signal wird durch sämtliche erreichbare Mobilfunkgeräte ausgewertet und ermöglicht eine zeitliche Synchronisation auf das Messgerät. Erst danach kann ein individueller Verbindungsaufbau zwischen dem Mobilfunkgerät und der Basisstation bzw. einem entsprechenden Messgerät erfolgen. Wenn eine Verbindung zwischen dem Messgerät und dem Mobilfunkgerät aufgebaut ist, können anschließend die einzelnen Messvorgänge wie in der Spezifikation festgelegt durchgeführt werden.

Erfindungsgemäß ist nun zusätzlich ein zweiter Signalpfad 8 vorgesehen, über den das Testsignal mit gedämpfter Signalstärke auch an denjenigen Prüfanschluss 22 oder 23 übermittelt wird, welcher nicht mit dem ersten Signalpfad 7 verbunden ist. Wird beispielsweise der erste Schalter 9 in seine in der Fig. 1 dargestellte Position gebracht, so kann eine Messung an dem ersten Mobilfunkgerät 24 durchgeführt werden. Durch den zweiten Signalpfad 8 wird ein gezieltes übersprechen des Testsignals, das an dem Testsignaleingang 3 zugeführt wird, auf den zweiten Prüfanschluss 23 ermöglicht. Dort kann bereits eine Synchronisation durch das zweite Mobilfunkgerät 25 erfolgen. In Folge dessen kann nach Abschluss der Messung an dem ersten Mobilfunkgerät 24 durch Betätigen des ersten Schalters 9 unmittelbar ein Verbindungsaufbau durch das dann bereits synchronisierte zweite Mobilfunkgerät 25 zu dem angeschlossenen Messgerät erfolgen. Eine zusätzliche Zeitspanne, die zum Aufsynchronisieren des zweiten Mobilfunkgeräts 25 auf das BCCH-Signal und damit das Testsignal des Messgeräts erforderlich ist, kann damit entfallen.

Da durch das Messgerät zur Durchführung der Messungen bereits gedämpfte Testsignale zugeführt werden können, kann in einer bevorzugten Ausführungsform vorgesehen sein, die Dämpfung des Signalteils, der dem zweiten Signalpfad 8 zugeführt wird, einzustellen. Damit kann auch bei einem bereits abgeschwächt zugeführten Testsignal durch eine geringere weitere Dämpfung beispielsweise in dem Signalteiler 6 noch eine zur Synchronisation ausreichende Signalstärke des zweiten Signalteils erreicht werden.

Der zweite Signalpfad 8 verzweigt sich an einer Verzweigungseinrichtung 27 in einen ersten Signalzweig 40 und einen zweiten Signalzweig 41. Im einfachsten Beispiel kann die Verzweigungseinrichtung 27 als Spliter ausgeführt sein. Dies setzt jedoch voraus, dass die Signalteile in dem ersten Signalpfad 7 und in dem zweiten Signalpfad 8 ausreichend entkoppelt sind. In dem dargestellten Ausführungsbeispiel ist die Verzweigungsvorrichtung 27 als Schalter mit insgesamt drei Anschlüssen 28, 29 und 30 ausgeführt.

In dem vorbeschriebenen Ausführungsbeispiel, bei dem der Testsignaleingang 3 über den ersten Signalpfad 7 mit dem ersten Prüfanschluss 22 verbunden ist, befindet sich der Schalter in der in der Figur 1 dargestellten Position. In dieser Position sind die Anschlüsse 30 und 29 miteinander verbunden. Der zweite Signalteil, der über den Signalteiler 6 in den zweiten Signalpfad 8 abgezweigt wird, wird somit dem zweiten Signalzweig 41 zugeführt. In dem zweiten Signalzweig 41 ist mit dem Anschluss 29 des Schalters der Verzweigungsvorrichtung 27 verbunden ein Schaltelement 32 angeordnet. Das Schaltelement 32 weist seinerseits drei Anschlüsse 35, 36 und 39 auf. Während der Anschluss 39 des Schaltelements 32 mit der zweiten HF-Verbindungseinrichtung 15 verbunden ist, ist der Anschluss 35 des Schaltelements 32 mit dem Anschluss 29 des Schalters der Verzweigungsvorrichtung 27 verbunden.

In der dargestellten Schaltposition des Schaltelements 32 wird somit der zweite Signalteil über den gemeinsamen Abschnitt des zweiten Signalpfads 8 zwischen dem Signalteiler 6 und der Verzweigungseirichtung 27 und den zweiten Signalzweig 41 der zweiten HF-Verbindungseinrichtung 15 zugeführt. Dabei wird auf dem Signalweg der zweite Signalteil durch eine Dämpfungsvorrichtung abgeschwächt.

In dem dargestellten Ausführungsbeispiel umfasst die Dämpfungsvorrichtung drei Dämpfungsglieder 26.1, 26.2 und 26.3. Dabei liegen in dem Signalweg des zweiten Testsignalteils zwei Dämpfungsglieder 26.1 und 26.3. Während das erste Dämpfungsglied 26.1 in dem gemeinsamen Abschnitt des zweiten Signalpfads 8 angeordnet ist, sind die zweiten und dritten Dämpfungsglieder 26.2 und 26.3 in dem ersten Signalzweig 40 bzw. dem zweiten Signalzweig 41 angeordnet. Die Dämpfungsglieder 26.2 und 26.3 sind vorzugsweise zwischen einem Schaltelement 32 in dem zweiten Signalzweig 41 bzw. einem weiteren Schaltelement 31 in dem ersten Signalzweig 40 und dem jeweils korrespondierenden ersten HF-Verbindungseinrichtung 14 bzw. zweiten HF-Verbindungseinrichtung 15 angeordnet. Durch das erste Dämpfungsglied 26.1 wird eine Entkopplung des Signalteilers 6 von der Verzweigungsvorrichtung 27 erreicht. Das zweite bzw. das dritte Dämpfungsglied 26.2 bzw. 26.3 entkoppelt die erste HF-Verbindungseinrichtung 14 und das weitere Schaltelement 31 bzw. die zweite HF-Verbindungseinrichtung 15 und das Schaltelement 32. Bei Verwendung eines einfachen Splitters als Verzweigungsvorrichtung 27 müssen die Schaltelemente 31, 32 angepasst werden, um die ausreichende Entkopplung sicherzustellen.

Um den zweiten Signalzweig 41 stilllegen zu können, ohne dass das Messergebnis beeinflusst wird, ist an dem Anschluss 36 des Schaltelements 32 ein Abschlusswiderstand 37 vorgesehen. Somit kann durch Betätigen des Schaltelements 32 eine Verbindung zwischen den Anschlüssen 39 und 36 erzeugt werden. Der zweite Signalzweig 41 ist somit vollständig von dem gemeinsamen Abschnitt des zweiten Signalpfads 8 entkoppelt.

Die Dämpfungsvorrichtung hat die Aufgabe, die Entkopplung des abgeschwächten Signalteils des Testsignals zu erreichen, so dass die Messung unbeeinflusst bleibt. Die weiteren Dämpfungsglieder 26.2 und 26.3 bewirken dabei, dass die Schaltposition der Schaltelemente 31 bzw. 32 ohne Einfluss auf die Messung bleibt.

Der erste Signalzweig 40 ist entsprechend dem zweiten Signalzweig 41 aufgebaut. Auch hier ist ein Dämpfungsglied 26.2 vorgesehen, dass zwischen dem weiteren Schaltelement 31 und der ersten HF-Verbindungseinrichtung 14 angeordnet ist. Das weitere Schaltelement 31 verfügt ebenfalls über drei Anschlüsse 32, 33 und 38 wobei an dem Anschluss 33 ein Abschlusswiderstand 34 vorgesehen ist.

Der erste Schalter 9 und der zweite Schalter 17 sind vorzugsweise miteinander gekoppelt, so dass bei Betätigen der Umschaltvorrichtung 1 gleichzeitig der erste Schalter 9 und der zweite Schalter 17 in ihre jeweils andere Position gebracht werden. In dem dargestellten Ausführungsbeispiel weist die Verzweigungsvorrichtung 27 ferner vorzugsweise einen Schalter auf, so dass ausschließlich jeweils derjenige Prüfanschluss 22 oder 23, der nicht über den ersten Signalpfad 7 mit dem Signalteiler 6 verbunden ist, ein abgeschwächtes Testsignal zugeführt bekommt. Es ist jedoch auch denkbar, lediglich einen Splitter einzusetzen. In diesem Fall erhält nicht nur der über der ersten Schalter 9 nicht mit dem Signalteiler 6 verbundene Prüfanschluss das abgeschwächte Testsignal, sondern es wird vielmehr sowohl in Richtung der ersten HF-Verbindungseinrichtung 14 als auch der zweiten HF-Verbindungseinrichtung 15 zugeführt. Dies erfordert allerdings eine Anpassung des Schaltelements 32 und des weiteren Schaltelements 31. Es ist dann bevorzugt, wenn jeweils eines der beiden Schaltelemente 31, 32 eine Verbindung zum ersten bzw. zweiten Prüfanschluss 22 bzw. 23 erzeugt und das andere Schaltelement 32, 31 ausgeschaltet ist. Das jeweils ausgeschaltete Schaltelement 31 oder 32 stellt dann einen angepassten Abschlusswiderstand für die Verzweigungsvorrichtung 27 dar, z. B. 50 Ω.

In der ersten HF-Verbindungseinrichtung 14 bzw. der zweiten HF-Verbindungseinrichtung 15 erfolgt die Kombination bzw. das Auftrennen zwischen dem gesendeten Testsignal und dem empfangenen Messsignal. Dadurch kann der erste Prüfanschluss 22 und der zweite Prüfanschluss 23 als bidirektionale Schnittstelle zu dem ersten Mobilfunkgerät 24 bzw. dem zweiten Mobilfunkgerät ausgebildet sein.

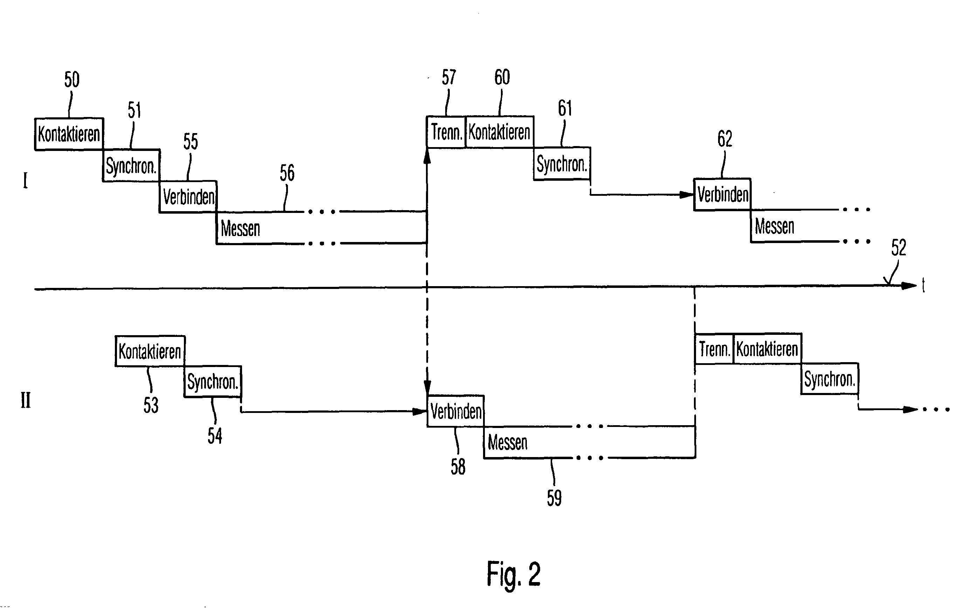

In der Figur 2 ist eine schematische Darstellung für den zeitlichen Ablauf beim Messen von mehreren Mobilfunkgeräten an einem einzelnen Messgeräteanschluss des Messgeräts dargestellt. Mit "I" ist dabei der erste Prüfanschluss 21 und mit "II" der zweite Prüfanschluss 22 identifiziert. Zunächst wird zu Beginn ein erstes Mobilfunkgerät an den ersten Prüfanschluss 22 angeschlossen. Nach den Kontaktieren 50 empfängt das erste Mobilfunkgerät ein Testsignal. Der erste Schalter 9 und der zweite Schalter 17 befinden sich in der in der Figur 1 dargestellten Position. Dem ersten Mobilfunkgerät wird somit das Testsignal in nicht abgeschwächter Form zugeführt und es erfolgt eine Synchronisation 51 auf das darin enthaltene BCCH-Signal. Bereits während dieser Synchronisation zwischen dem ersten Mobilfunkgerät und dem Messgerät kann an dem zweiten Prüfanschluss 23 ein zweites Mobilfunkgerät 25 angeschlossen werden. Unterhalb des Zeitstrahls 52 ist diese Kontaktierung 53 an dem zweiten Prüfanschluss 23 dargestellt. Die Verzweigungsvorrichtung 27 ermöglicht ein Übersprechen des an dem Testsignaleingang 3 zugeführten Testsignals auf den zweiten Prüfanschluss 23, so dass nach dem Kontaktieren 53 des zweiten Mobilfunkgeräts an dem zweiten Prüfanschluss 23 unmittelbar eine Synchronisation 54 des zweiten Mobilfunkgeräts 25 erfolgt.

Nachdem an dem ersten Prüfanschluss 22 die Synchronisation 51 des ersten Mobilfunkgeräts abgeschlossen ist, erfolgt ein Verbindungsaufbau 55 zwischen dem Messgerät und dem ersten Mobilfunkgerät 24. Nach erfolgtem Verbindungsaufbau 55 wird entsprechend den Spezifikationen eine Messung 56 von Parametern an dem ersten Mobilfunkgerät 24 durchgeführt.

Nachdem das Kontaktieren 53 des zweiten Mobilfunkgeräts 25 abgeschlossen ist, erfolgt die Synchronisation 54 auf Basis des übersprechenden Testsignals bzw. des in dem zweiten Signalteil enthaltenen BCCH-Signals an dem zweiten Prüfanschluss 23. Nach erfolgter Synchronisation 54 ist das zweite Mobilfunkgerät 25 bereit für einen Verbindungsaufbau. Da die Messung an dem ersten Prüfanschluss 22 noch nicht abgeschlossen ist, bleiben alle Schalter in der in der Fig. 1 dargestellten Position. Nach Abschluss der Messungen 56 an dem ersten Prüfanschluss 22 wird die Umschaltvorrichtung 1 betätigt, wobei hierzu eine automatisierte Erkennung der abgeschlossenen Messung 56 vorteilhaft ist. Das erste Mobilfunkgerät 24 wird durch eine Bedienperson beispielsweise aus einem Adapter herausgenommen und somit von dem ersten Prüfanschluss 22 getrennt (57). Bevor dies gemacht wird, werden jedoch zumindest der erste Schalter 9 und der zweite Schalter 17 in ihre jeweils andere Position gebracht. Damit wird nun das nicht gedämpfte Testsignal über den ersten Signalpfad 7 an den zweiten Prüfanschluss 23 übermittelt. Infolgedessen erfolgt ein Verbindungsaufbau 58 zwischen dem zweiten Mobilfunkgerät 25 und dem Messgeräteanschluss 2. Nach einem dort erfolgten Verbindungsaufbau 58 wird an dem zweiten Mobilfunkgerät 25 eine Messung 59 entsprechend der vorangegangenen Messung 56 an dem ersten Mobilfunkgerät 24 durchgeführt.

Nachdem das erste Mobilfunkgerät 24 von dem ersten Prüfanschluss 22 getrennt wurde (57), wird ein neues Mobilfunkgerät in den Adapter eingesetzt und damit eine neue Kontaktierung 60 zwischen dem ersten Prüfanschluss 22 und diesem Mobilfunkgerät durchgeführt. Da mittlerweile auch die Verzweigungsvorrichtung 27 in ihre andere Position gebracht wurde, wird das gedämpfte Signal über den zweiten Signalpfad 8 mit dem ersten Signalzweig 40 nun an den zweiten Prüfanschluss 22 übermittelt. Infolgedessen kann das dort angeschlossene dritte Mobilfunkgerät synchronisiert werden (61). Nachdem die Synchronisation (61) des dritten Mobilfunkgeräts abgeschlossen ist, geht auch das dritte Mobilfunkgerät in einen Wartezustand über. Nach Abschluss der Messung 59 an dem zweiten Mobilfunkgerät 25, welches an dem zweiten Prüfanschluss 23 angeschlossen ist, werden wieder der erste Schalter 9, der zweite Schalter 17 betätigt und damit ein Verbindungsaufbau 62 zwischen dem dritten Mobilfunkgerät, welches an dem ersten Prüfanschluss 22 angeschlossen ist, ermöglicht.

Die erfindungsgemäße Umschaltvorrichtung 1 hat den Vorteil, dass das Testsignal, welches zur Messung lediglich an einen von zwei Prüfanschlüssen 22, 23 undgedämpft weitergeleitet wird, gezielt in abgeschwächter Form dem jeweils anderen Prüfanschluss 23, 22 zugeführt wird. Das dort kontaktierte Mobilfunkgerät kann somit bereits synchronisiert werden, noch bevor die Messung an dem anderen Prüfanschluss abgeschlossen ist. Diese führt zu einer erheblichen Zeitersparnis, da im Unterschied zum bisher bekannten Vorgehen die Synchronisation bereits gleichzeitig mit einer an dem anderen Anschluss durchgeführten Messung erfolgen kann.

Die gezeigte Umschaltvorrichtung 1 ist insbesondere für GSM-Mobilfunk geeignet. Hier wird ein sogenanntes BCCH-Signal verwendet, um eine Synchronisation der Mobilfunkgeräte mit der jeweiligen Basisstation, die im Messfall durch das Messgerät emuliert wird, erzeugt wird. Die Umschaltvorrichtung 1 kann jedoch vorteilhaft z.B. auch bei Mobilfunk der dritten Generation eingesetzt werden. Hierbei erfolgt dann die Synchronisation zunächst im GSM-Modus, um dann nach erfolgtem Verbindungsaufbau einen Handover beispielsweise nach WCDMA durchgeführt wird. Anschließend können dann die CDMA (Code Division Multiple Access)-Parameter gemessen werden.

Die Erfindung ist am Beispiel einer Umschaltvorrichtung 1 mit lediglich zwei Prüfanschlüssen 22, 23 erläutert worden. Selbstverständlich ist eine Erweiterung auf drei oder mehr Anschlüsse denkbar.

## Patentansprüche

1. Umschaltvorrichtung zum wechselweisen Verbinden zumindest eines ersten Prüfanschlusses (22) oder eines zweiten Prüfanschlusses (23) mit einem Messgeräteanschluss (2), wobei der Messgeräteanschluss (2) zumindest einen Testsignaleingang (3) aufweist,
**dadurch gekennzeichnet,**
**dass** der Testsignaleingang (3) mit einem ersten Signalpfad (7) und einem zweiten, gedämpften Signalpfad (8) verbunden ist, wobei der erste Signalpfad (7) wechselweise mit dem ersten Prüfanschluss (22) oder dem zweiten Prüfanschluss (23) verbunden ist und der zweite Signalpfad (8) zumindest mit dem jeweils einem anderen Prüfanschluss (23, 22) verbunden ist.

2. Umschaltvorrichtung nach Anspruch 1,
**dadurch gekennzeichnet,**
**dass** der zweite Signalpfad (8) eine Dämpfungsvorrichtung (26.1, 26.2, 26.3) aufweist.

3. Umschaltvorrichtung nach Anspruch 1 oder 2,
**dadurch gekennzeichnet,**
**dass** der zweite Signalpfad (8) eine Verzweigungsvorrichtung (27) aufweist, durch welche der zweite Signalpfad (8) über einen ersten Signalzweig (40) bzw. über einen zweiten Signalzweig (41) mit dem ersten und/oder dem zweiten Prüfanschluss (22, 23) verbunden ist.

4. Umschaltvorrichtung nach Anspruch 3,
**dadurch gekennzeichnet,**
**dass** die Verzweigungsvorrichtung (27) ein Splitter ist.

5. Umschaltvorrichtung nach Anspruch 3,
**dadurch gekennzeichnet,**
**dass** die Verzweigungsvorrichtung (27) ein Schaltelement aufweist.

6. Umschaltvorrichtung nach Anspruch 3,
**dadurch gekennzeichnet,**
**dass** die Verzweigungsvorrichtung (27) über den ersten Signalzweig (7) mit dem ersten Prüfanschluss (22) verbunden ist und über einen zweiten Signalzweig (41) mit dem zweiten Prüfanschluss (23) verbunden ist, wobei in dem ersten und in dem zweiten Signalzweig (40, 41) jeweils ein Schaltelement (31, 32) vorgesehen ist, durch das der erste Prüfanschluss (22) bzw. der zweite Prüfanschluss (23) mit einem Abschlusswiderstand (34, 37) verbindbar sind.

7. Umschaltvorrichtung nach Anspruch 3 oder 4,
**dadurch gekennzeichnet,**
**dass** die Dämpfungsvorrichtung (26.1, 26.2, 26.3) ein in einem gemeinsamen Abschnitt des zweiten Signalpfads (8) angeordnetes Dämpfungsglied (26.1) und in jedem Signalzweig (40, 41) ein weiteres Dämpfungsglied (26.2, 26.3) aufweist.

8. Umschaltvorrichtung nach einem der Ansprüche 1 bis 7, **dadurch gekennzeichnet,**
**dass** der erste Prüfanschluss (22) und der zweite Prüfanschluss (23 wechselweise mit einem Messsignalausgang (4) des Messgeräteanschlusses (2) verbindbar sind.

9. Umschaltvorrichtung nach Anspruch 8,
**dadurch gekennzeichnet,**
**dass** zum wechselweisen Verbinden des ersten Prüfanschlusses (22) und des zweiten Prüfanschlusses (23) mit dem Testsignaleingang (3) bzw. dem Messsignalausgang (4) jeweils ein Schalter (9, 17) vorgesehen ist.

## Claims

1. A switching device for alternately connecting at least one first test connection (22) or a second test connection (23) to a measuring-device connection (2), wherein the measuring-device connection (2) provides at least one test signal input (3),
**characterised in that**
the test signal input (3) is connected to a first signal path (7) and to a second, attenuated signal path (8), wherein the first signal path (7) is connected alternately to the first test connection (22) or to the second test connection (23), and the second signal path (8) is connected at least to the one respectively other test connection (23, 22).

2. The switching device according to claim 1, **characterised in that**
the second signal path (8) provides an attenuation device (26.1, 26.2, 26.3).

3. The switching device according to claim 1 or 2, **characterised in that**
the second signal path (8) provides a branching device (27), through which the second signal path (8) is connected via a first signal branch (40) or respectively via a second signal branch (41) to the first and/or to the second test connection (22, 23).

4. The switching device according to claim 3, **characterised in that**
the branching device (27) is a splitter.

5. The switching device according to claim 3, **characterised in that**
the branching device (27) provides a switching element.

6. The switching device according to claim 3, **characterised in that**
the branching device (27) is connected via the first signal branch (7) to the first test connection (22) and via a second signal branch (41) to the second test connection (23), wherein a switch element (31, 32), through which the first test connection (22) or respectively the second test connection (23) can be connected to a terminal resistor (34, 37), is provided in each case in the first and in the second signal branch (40, 41).

7. The switching device according to claim 3 or 4, **characterised in that**
the attenuation device (26.1, 26.2, 26.3) provides an attenuation element (26.1) disposed in a common portion of the second signal path (8) and a further attenuation element (26.2, 36.3) in each signal branch (40, 41).

8. The switching device according to any one of claims 1 to 7,
**characterised in that**
the first test connection (22) and the second test connection (23) can be connected alternately to a measured-signal output (4) of the measuring-device connection (2).

9. The switching device according to claim 8, **characterised in that**
a switch (9, 17) is provided in each case for alternately connecting the first test connection (22) and the second test connection (23) to the test signal input (3) and respectively to the measured-signal output (4).

## Revendications

1. Dispositif de commutation pour la liaison alternante d'au moins un premier branchement de test (22) ou d'un deuxième branchement de test (23) avec un branchement de l'appareil de mesure (2), ledit branchement de l'appareil de mesure (2) comportant au moins une entrée de signal test (3),
**caractérisé en ce que**
l'entrée de signal test (3) est reliée à une première voie de transmission du signal (7) et à une deuxième voie de transmission du signal (8) atténuée, la première voie de transmission du signal (7) étant reliée tour à tour avec le premier branchement de test (22) ou le deuxième branchement de test (23), et la deuxième voie de transmission du signal (8) étant reliée au moins avec respectivement l'autre branchement de test (23, 22).

2. Dispositif de commutation selon la revendication 1, **caractérisé en ce que** la deuxième voie de transmission du signal (8) comporte un dispositif d'atténuation (26.1, 26.2, 26.3).

3. Dispositif de commutation selon la revendication 1 ou 2, **caractérisé en ce que** la deuxième voie de transmission du signal (8) comporte un dispositif de ramification (27), par lequel la deuxième voie de transmission du signal (8) est reliée via une première branche de transmission du signal (40) ou via une deuxième branche de transmission du signal (41) avec le premier et/ou le deuxième branchement de test (22, 23).

4. Dispositif de commutation selon la revendication 3, **caractérisé en ce que** le dispositif de ramification (27) est un diviseur.

5. Dispositif de commutation selon la revendication 3, **caractérisé en ce que** le dispositif de ramification (27) est un élément de commutation.

6. Dispositif de commutation selon la revendication 3, **caractérisé en ce que** le dispositif de ramification (27) est relié via la première branche de transmission du signal (7) au premier branchement de test (22) et via une deuxième branche de transmission du signal (41) au deuxième branchement de test (23), sachant que dans la première et la deuxième branche de transmission du signal (40, 41), il est respectivement prévu un élément de commutation (31, 32), par lequel le premier branchement de test (22) ou le deuxième branchement de test (23) peuvent être reliés respectivement à une résistance de fermeture (34, 37).

7. Dispositif de commutation selon la revendication 3 ou 4, **caractérisé en ce que** le dispositif d'atténuation (26.1, 26.2, 26.3) comporte un organe d'atténuation (26.1), disposé dans un tronçon commun de la deuxième voie de transmission du signal (8), et un autre organe d'atténuation (26.2, 26.3) dans chaque branche de transmission du signal (40, 41).

8. Dispositif de commutation selon l'une quelconque des revendications 1 à 7, **caractérisé en ce que** le premier branchement de test (22) et le deuxième branchement de test (23) peuvent être reliés tour à tour avec une sortie de signal de mesure (4) du branchement de l'appareil de mesure (2).

9. Dispositif de commutation selon la revendication 8, **caractérisé en ce qu'**il est prévu respectivement un commutateur (9, 17) pour la liaison alternante du premier branchement de test (22) et du deuxième branchement de test (23) avec l'entrée du signal test (3) ou la sortie du signal de mesure (4).
